# EUROPÄISCHE PATENTSCHRIFT

(11) **EP 2 052 166 B1**
(45) Veröffentlichungstag und Bekanntmachung des Hinweises auf die Patenterteilung: **10.04.2013**
(21) Anmeldenummer: 07786565.7
(22) Anmeldetag: 04.08.2007
(51) Int. Cl.: F16F 7/06

(54) **VORRICHTUNG ZUR BEGRENZUNG EINER DREHBEWEGUNG**
DEVICE FOR LIMITING A ROTARY MOVEMENT
DISPOSITIF DE LIMITATION D'UN MOUVEMENT ROTATIF

(30) Priorität: 18.08.2006 DE 102006038778
(43) Veröffentlichungstag der Anmeldung: 29.04.2009
(73) Patentinhaber: Aktiebolaget SKF, 415 50 Göteborg (SE)
(72) Erfinder: TSCHUDIN, Beat, 4153 Reinach (CH)
(74) Vertreter: Kohl, Thomas
(86) Internationale Anmeldenummer: PCT/EP2007/006911
(87) Internationale Veröffentlichungsnummer: WO 2008/019770

(56) Entgegenhaltungen:
- EP-A1- 1 335 090
- GB-A- 322 587
- US-A- 3 283 857
- US-A- 5 875 874

## Beschreibung

Die Erfindung betrifft eine Vorrichtung zur Begrenzung einer Drehbewegung, wie beispielweise aus der US 5,875,874 A bekannt. Zur Begrenzung einer Drehbewegung ist es bekannt, beispielsweise Torsionsfedern einzusetzen. Insbesondere bei großen Drehmomenten können derartige Torsionsfedern sehr kostenintensiv sein und es kann problematisch sein, eine gewünschte Begrenzungscharakteristik durch das Torsionsfederdesign einzustellen.

Eine Aufgabe der Erfindung ist es daher eine Vorrichtung zur Begrenzung einer Drehbewegung derart zu schaffen, dass bei exakt definierbarer Kennlinie eine große kinetische Energie sicher beherrschbar ist.

Die Aufgabe wird durch den Gegenstand des Anspruchs 1 gelöst. Vorteilhafte Ausgestaltungen sind in den Unteransprüchen beschrieben.

Gemäß Anspruch 1 beinhaltet eine Vorrichtung zur Begrenzung einer Drehbewegung folgende Merkmale:
- Eine wenigstens für ein Verschwenken vorgesehene Welle mit wenigstens einem Abschnitt mit einem Außenmantel, der im Querschnitt ein eckengerundetes Polygon ist, und
- ein Hohlkörper, der besagten Abschnitt der Welle anliegend umschließt, dessen Höhlung mit einem Querschnitt entsprechend dem der Welle ausgebildet ist und dessen Außenmantel wenigstens eine Ausformung aufweist, die zum Anschlagen an einem entsprechenden Anschlag ausgebildet ist
   und
- der Anschlag und die Ausformung sind derart ausgebildet, dass bei einem Anschlagen der Ausformung am Anschlag ein Weiterdrehenwollen der Welle über ein Aufweiten des Hohlkörpers zu einer sicheren Begrenzung der Drehbewegung führt.

Alsbald besagte Ausformung aufgrund einer Drehbewegung der Welle, wodurch der Hohlkörper mitgedreht wird, an besagtem Anschlag anschlägt, wird durch ein sich Weiterdrehenwollen der Welle aufgrund einer Verdrehung besagten Abschnitts der Welle mit dem Außenmantel, der im Querschnitt ein eckengerundetes Polygon ist, gegen den entsprechend geformten Innenmantel des Hohlkörpers der Höhlkörper quasi geweitet. Dies führt mit Vorteil insbesondere zu einer Zugspannungsbelastung im Hohlkörper, wodurch in für das Material verträglicher Art und Weise auch vergleichsweise hohe kinetische Energien gut absorbierbar sind, so dass eine hohes Energieabsorptionsvermögen der Vorrichtung erzielt wird. Ein weiterer wichtiger Vorteil liegt darin, dass die Begrenzung unabhängig von einer Verschwenkrichtung der Welle funktioniert.

Durch eine entsprechend dimensionierte radiale Dicke und/oder axiale Erstreckung des Wellenabschnitts und/oder des Hohlkörpers und/oder durch eine entsprechende Materialauswahl und/oder -behandlung des Wellenabschnitts und/oder des Hohlkörpers und/oder durch entsprechend dimensionierte Querschnittsformen ist dabei ein wunschgemäßes Energieabsorptionsverhalten einstellbar, was mit Vorteil beispielweise eine Anpassung an unterschiedliche Belastbarkeiten der jeweiligen Umgebungskonstruktion der Vorrichtung erlaubt. Weiterhin wird natürlich auch durch die Reibung, die beim Verdrehen der beiden Querschnitte gegeneinander auftritt, eine Energieabsorption bewirkt.

Sind die beiden Querschnitte einmal gegeneinander verdreht, ist die Welle im Hohlkörper in der Regel festgewürgt. Ist das Gesamtsystem ferner derart gestaltet, dass sich dabei durch eine entsprechende Ausgestaltung auch die Ausformung am Anschlag beispielsweise verkeilt, ist ein Rückdrehen nicht ohne weiteres möglich ist, was insbesondere dann von Vorteil ist, wenn beispielsweise aus sicherheitstechnischen Erwägungen nach einem derartigen Ereignis ein Weiterbetrieb ohnehin nicht ohne weiteres möglich sein soll.

Gegenüber vergleichbaren Lösungen, beispielsweise unter Zuhilfenahme einer Torsionsfeder, zeichnet sich die erfindungsgemäße Lösung mit Vorteil durch einen einfachen Aufbau, eine geringe Anzahl von Bauelementen und ein geringes Gewicht aus.

In einer vorteilhaften Ausgestaltung ist der Querschnitt als eine Ellipse ausgebildet. Dabei ist ein wunschgemäßes Energieabsorptionsvermögen auch durch ein Verhältnis der Ellipsenhauptachsen zueinander und/oder eine Krümmung der Ellipsen einstellbar. Weiterhin ist gegebenenfalls lediglich darauf zu achten, dass die beiden Ellipsenformen um nicht mehr als ±90° gegeneinander verdreht werden können, da jenseits der 90° das Energieabsorptionsvermögen logischerweise wieder abnimmt.

In einer vorteilhaften Ausgestaltung ist die Welle mit dem Hohlkörper über Mittel verbunden ist, die bis zu einer vorgebbaren statischen oder dynamischen Drehmomentenbelastung die Welle drehfest mit dem Hohlkörper verbinden, wobei die Mittel insbesondere als Scherstifte ausgebildet sein können, die in entsprechende Einbauchungen von Welle und Hohlkörper eingreifend zwischen Welle und Hohlkörper vorgesehen sind. Damit ist mit Vorteil eine Art zweistufig wirkende Drehbewegungsbegrenzung erzielbar, da nach einem Anschlagen der Ausformung am Anschlag zunächst über die Scherstifte die Drehbewegungsbegrenzung erfolgt und erst nach einem Bersten dieser Scherstifte die vorausgehend beschriebene Begrenzung durch die sich gegeneinander verdrehenden Querschnitte eingreift.

Weitere Vorteile, Merkmale und Einzelheiten der Erfindung ergeben sich aus den im folgenden beschriebenen Ausführungsbeispielen der Erfindung anhand der Figuren. Dabei zeigen:
- Figur 1: einen Querschnitt durch eine Welle mit einem sie umschließenden Hohlkörper,
- Figur 2: einen Querschnitt durch eine Welle mit einem sie umschließenden Hohlkörper, wobei gegenüber Figur 1 Welle und Hohlkörper zusätzlich über Scherstifte miteinander drehfest verbunden sind, und
- Figur 3: neben den Ellipsen der Figuren 1 und 2 weitere mögliche Querschnittsformen.

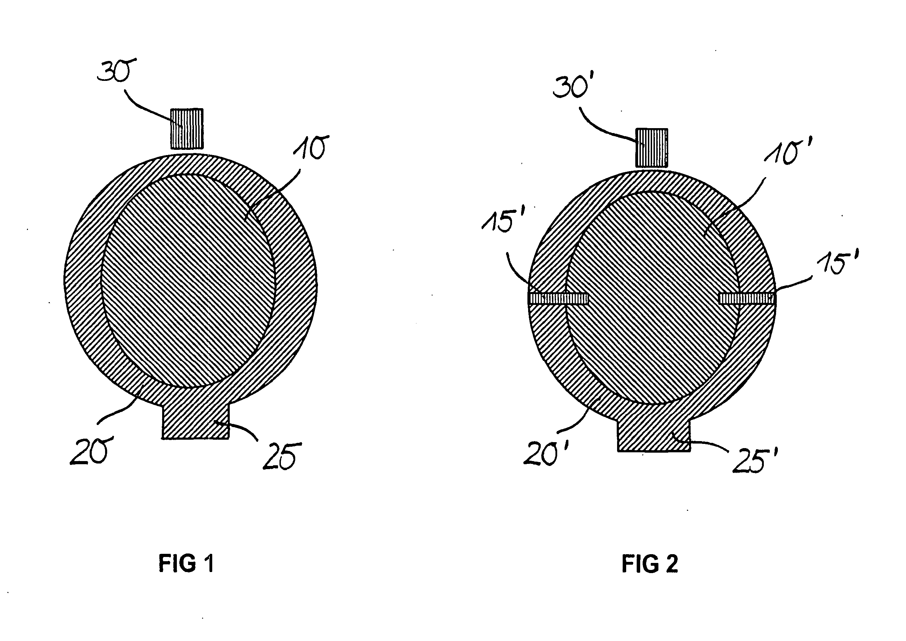

Die Figur 1 zeigt als ein Ausführungsbeispiel der Erfindung einen Querschnitt durch eine Welle 10 mit einem sie umschließenden Hohlkörper 20. Dabei ist die Welle 10 in dem quergeschnitten dargestellten Abschnitt mit einem ellipsenartigen Querschnittsprofil ausgebildet. Dieser Abschnitt ist von einem ringartigen Hohlkörper 20 umschlossen, dessen Höhlung entsprechend dem Abschnitt der Welle 10 mit einem entsprechenden ellipsenartigen Querschnittsprofil ausgebildet ist. Weiterhin umfasst der Hohlkörper 20 eine Ausformung 25, die zum Anschlagen an einem entsprechenden Anschlag 30 ausgebildet ist. Die Welle 10 und der Hohlkörper 20 sind dabei aus einem Stahl, insbesondere einem Nirostastahl ausgebildet. Ferner sind der Hohlkörper 20 und die Welle 10 derart aufeinander abgestimmt ausgebildet, dass bei nicht gegeneinander verdrehten Ellipsenformen der Hohlkörper 20 schiebesitzartig auf dem Abschnitt der Welle 10 angeordnet werden kann. In anderen Ausführungen kann anstelle von Stahl natürlich auch jedes andere geeignete Material, beispielsweise eine Leichtmetalllegierung oder Kunststoff zum Einsatz kommen.

Bei einem Drehen der Welle 10 wird also zunächst aufgrund des Formschlusses zwischen dem Hohlkörper 20 und besagtem Wellenabschnitt der Hohlkörper 20 synchron mitgedreht, solange bis die Ausformung 25 des Hohlkörpers 20 am Anschlag 30 anschlägt. Mit dem Anschlagen wird durch ein sich Weiterdrehenwollen der Welle 10 aufgrund einer Verdrehung der Ellipsenform besagten Wellenabschnitts gegen die Ellipsenform des sich nicht weiter drehen könnenden Hohlkörpers 20 der Hohlkörper 20 sozusagen aufgeweitet, was wunschgemäß zu einer Vernichtung von von der Welle 10 herrührenden Drehenergie führt und letztendlich eine sichere Begrenzung einer Verschwenk- bzw. Drehbewegung der Welle 10 erlaubt. Unter anderem in Abhängigkeit vom geforderten Energieabsorptionsverhalten sind die Ellipsenformen derart gestaltet, dass ein Längenunterschied der beiden Ellipsenhauptachsen größer 0 % bis etwa 5 % ist. Weiterhin ist klar, dass das System derart auszulegen ist, dass die beiden Ellipsenformen um nicht mehr als ± 90° gegeneinander verdreht werden können, da jenseits der 90° das Energieabsorptionsvermögen logischerweise wieder abnehmen würde.

Der Vollständigkeit halber sei erwähnt, dass vielfach durch eine entsprechende Steuerung bzw. Regelung der Schwenk- bzw. Drehbewegung der Welle ein Anschlagen der Ausformung 25 am Anschlag 30 verhindert wird und nur als Sicherheitsfunktion vorausgehend beschriebenes Anschlagen und die sich daran anschließende Begrenzung der Drehbewegung stattfindet, wenn beispielsweise besagte Steuerung oder Regelung und/oder eine Überstromschutzeinrichtung eines die Welle antreibenden Elektromotors versagt.

Die Figur 2 zeigt als ein weiteres Ausführungsbeispiel der Erfindung einen Querschnitt durch eine Welle 10' mit einem sie umschließenden Hohlkörper 20', wobei gegenüber Figur 1 die Welle 10' und der Hohlkörper 20' zusätzlich über Scherstifte 15' miteinander drehfest verbunden sind. Damit ist mit Vorteil eine Art zweistufig wirkende Verschwenkbewegungsbegrenzung erzielbar, da nach einem Anschlagen der Ausformung 25' am Anschlag 30' zunächst über die Scherstifte 15' die Verschwenkbewegungsbegrenzung erfolgt und erst nach einem Bersten dieser Scherstifte 15' die vorausgehend zur Figur 1 beschriebene Begrenzung durch die sich gegeneinander verdrehenden Ellipsenformen greift. Dabei ist beispielsweise durch eine entsprechend ausgewählte Dicke der Scherstifte 15' eine gewünschte Drehmomentenwiderstandsfestigkeit einstellbar. Ansonsten gilt das vorausgehend zu der Figur 1 Beschriebene entsprechend. Dabei sind bei der Figur 2 Bauelemente, die denen der Figur 1 entsprechen, mit gleichen Bezugszeichennummem, ergänzt um einen Hochstrich, bezeichnet.

In weiteren Ausführungsformen können zwischen der Ausformung 25 oder 25' und dem Anschlag 30 oder 30' auch an der Ausformung 25 oder 25' oder am Anschlag 30 oder 30' angebrachte Puffermittel, beispielsweise aus Kunststoff vorgesehen sein. Weiterhin kann natürlich auch die Welle 10 und/oder 10' im Bereich ihrer Ellipsenform hohlzylinderartig ausgebildet sein, wobei bei zu geringer Wandstärke gegebenenfalls aus Steifigkeitsgründen in die Hohlwelle im Bereich der Ellipsenform eine Stützscheibe einzusetzen ist.

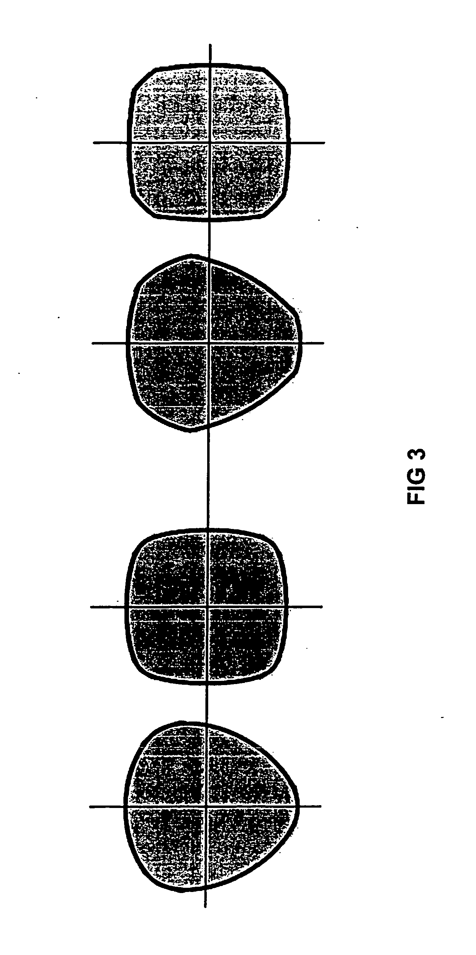

Die Figur 3 zeigt als weitere Ausführungsbeispiele der Erfindung anstelle der in den Figuren 1 und 2 beschriebenen Ellipsenformen ebenfalls verwendbare weitere Querschnittsformen. Dabei zeigt die Figur 3 von links nach rechts ein harmonisches Polygondreieckprofil, ein harmonisches Polygonviereckprofil, ein disharmonisches Polygondreieckprofil und ein disharmonisches Polygonviereckprofil.

## Patentansprüche

1. Vorrichtung zur Begrenzung einer Drehbewegung, beinhaltend folgende Merkmale:
- Eine wenigstens für ein Verschwenken vorgesehene Welle (10,10') mit wenigstens einem Abschnitt mit einem Außenmantel, der im Querschnitt ein eckengerundetes Polygon ist,
- ein Hohlkörper (20, 20'), der besagten Abschnitt der Welle (10,10') anliegend umschließt, dessen Höhlung mit einem Querschnitt entsprechend dem der Welle ausgebildet ist und dessen Außenmantel wenigstens eine Auszformung (25,25') aufweist, die zum Anschlagen an einem entsprechenden Anschlag (30,30') ausgebildet ist, **dadurch gekennzeichnet, dass**
- der Anschlag (30,30') und die Ausformung (25,25') derart ausgebildet sind, dass bei einem
- Anschlagen der Ausformung am Anschlag ein Weiterdrehenwollen der Welle (10,10') über ein Aufweiten des Hohlkörpers zu einer sicheren Begrenzung der Drehbewegung führt.

2. Vorrichtung nach Anspruch 1, wobei der Querschnitt als ein harmonisches oder disharmonisches Polygondreieckprofil oder Polygonviereckprofil ausgebildet ist.

3. Vorrichtung nach Anspruch 1, wobei der Querschnitt als eine Ellipse ausgebildet ist.

4. Vorrichtung nach Anspruch 3, wobei der ellipsenartige Querschnitt derart gestaltet ist, dass ein Längenunterschied der beiden Ellipsenhauptachsen größer 0 % bis etwa 5 % ist.

5. Vorrichtung nach einem der Ansprüche 1 bis 4, wobei die Vorrichtung derart dimensioniert ist, dass der auf dem Abschnitt angeordnete Hohlkörper (20,20') maximal um die Hälfte eines Winkels gegen die Welle (10,10') verdrehbar ist, der sich bei Zusammensetzung des Querschnitts aus einem Kreis und wenigstens zweier am Umfang des Kreises angeordneten Ausbauchungen zwischen den Scheiteln zweier Ausbauchungen erstreckt.

6. Vorrichtung nach einem der Ansprüche 1 bis 5, wobei die Vorrichtung derart ausgebildet ist, dass der Hohlkörper (20,20') schiebesitzartig auf dem Abschnitt anordenbar ist.

7. Vorrichtung nach einem der Ansprüche 1 bis 6, wobei der Hohlkörper (20,20') ringartig ausgebildet ist.

8. Vorrichtung nach einem der Ansprüche 1 bis 7, wobei der Hohlkörper (20,20') und/oder die Welle (10,10') aus einem Stahl ausgebildet sind.

9. Vorrichtung nach Anspruch 8, wobei der Stahl ein Nirostastahl ist.

10. Vorrichtung nach einem der Ansprüche 1 bis 9, wobei die Welle (10,10') mit dem Hohlkörper (20,20') über Mittel verbunden ist, die bis zu einer vorgebbaren statischen oder dynamischen Drehmomentenbelastung die Welle drehfest mit dem Hohlkörper (20,20') verbinden.

11. Vorrichtung nach Anspruch 10, wobei die Mittel formschlüssig in entsprechende Einbauchungen von Welle (10,10') und Hohlkörper (20,20') eingreifend, zwischen Welle und Hohlkörper vorgesehen sind.

12. Vorrichtung nach einem der Ansprüche 10 oder 11, wobei die Mittel wenigstens einen Scherstift (15') umfassen.

13. Vorrichtung nach einem der Ansprüche 1 bis 12, wobei die Ausformung (25,25') zahnartig ausgebildet ist.

14. Vorrichtung nach einem der Ansprüche 1 bis 13, wobei die Vorrichtung einem Verschwenksystem eines C-Bogen-Röntgengeräts zum Verschwenken des C-Bogens um eine auf dem C-Bogen in etwa senkrecht stehende Achse zugehört.

## Claims

1. Apparatus for limiting a rotational movement, containing the following features:
- a shaft (10, 10') which is provided at least for a pivoting action and has at least one section with an outer shell which has a polygonal cross section with rounded corners,
- a hollow body (20, 20') which encloses the said section of the shaft (10, 10') so as to bear against it, and the cavity of which hollow body (20, 20') is configured with a cross section in accordance with that of the shaft, and the outer shell of which hollow body (20, 20') has at least one shaped-out moulding (25, 25') which is configured for coming into contact with a corresponding stop (30, 30'), **characterized in that**
- the stop (30, 30') and the shaped-out moulding (25, 25') are configured in such a way that, in the case of the shaped-out moulding being in contact with the stop, a desire to rotate the shaft (10, 10') further via widening of the hollow body leads to reliable limiting of the rotational movement.

2. Apparatus according to Claim 1, the cross section being configured as a harmonic or disharmonic triangular polygon profile or quadrilateral polygon profile.

3. Apparatus according to Claim 1, the cross section being configured as an ellipse.

4. Apparatus according to Claim 3, the elliptical cross section being designed in such a way that a length difference of the two main ellipse axes is greater than from 0% to approximately 5%.

5. Apparatus according to one of Claims 1 to 4, the apparatus being dimensioned in such a way that the hollow body (20, 20') which is arranged on the section can be rotated with respect to the shaft (10, 10') by at most half the angle which extends between the crests of two bulges when the cross section is assembled from a circle and at least two bulges which are arranged on the circumference of the circle.

6. Apparatus according to one of Claims 1 to 5, the apparatus being configured in such a way that the hollow body (20, 20') can be arranged on the section in the manner of a sliding fit.

7. Apparatus according to one of Claims 1 to 6, the hollow body (20, 20') being of annular configuration.

8. Apparatus according to one of Claims 1 to 7, the hollow body (20, 20') and/or the shaft (10, 10') being formed from a steel.

9. Apparatus according to Claim 8, the steel being a Nirosta steel.

10. Apparatus according to one of Claims 1 to 9, the shaft (10, 10') being connected to the hollow body (20, 20') via means which connect the shaft fixedly to the hollow body (20, 20') so as to rotate with it up to a predefinable static or dynamic torque load.

11. Apparatus according to Claim 10, the means being provided between the shaft and hollow body so as to engage in a positively locking manner into corresponding indentations of the shaft (10, 10') and hollow body (20, 20').

12. Apparatus according to either of Claims 10 and 11, the means comprising at least one shear pin (15').

13. Apparatus according to one of Claims 1 to 12, the shaped-out moulding (25, 25') being of tooth-like configuration.

14. Apparatus according to one of Claims 1 to 13, the apparatus belonging to a pivoting system of a C-arm X-ray unit for pivoting the C-arm about an axis which lies approximately perpendicularly on the C-arm.

## Revendications

1. Dispositif de limitation d'un mouvement rotatif, comportant les caractéristiques suivantes :
- un arbre (10, 10') prévu au moins pour un pivotement, comprenant au moins un segment doté d'une enveloppe extérieure qui est un polygone à angles arrondis en section transversale,
- un corps creux (20, 20') qui entoure de manière adjacente ledit segment de l'arbre (10, 10'), dont l'espace creux est réalisé avec une section transversale correspondant à celle de l'arbre et dont l'enveloppe extérieure comprend au moins une partie saillante (25, 25') qui est réalisée pour venir buter contre une butée correspondante (30, 30'),
**caractérisé en ce que**
- la butée (30, 30') et la partie saillante (25, 25') sont réalisées de telle sorte que, lorsque la partie saillante vient buter contre la butée, une tendance de l'arbre (10, 10') à continuer à tourner conduit à une limitation sûre du mouvement rotatif au moyen d'un élargissement du corps creux.

2. Dispositif selon la revendication 1, dans lequel la section transversale est réalisée sous forme de profil triangulaire polygonal ou profil quadrangulaire polygonal harmonique ou disharmonique.

3. Dispositif selon la revendication 1, dans lequel la section transversale est réalisée en tant qu'ellipse.

4. Dispositif selon la revendication 3, dans lequel la section transversale en forme d'ellipse est configurée de telle sorte qu'une différence de longueur des deux axes principaux de l'ellipse est supérieure à 0 % jusqu'à approximativement 5 %.

5. Dispositif selon l'une quelconque des revendications 1 à 4, dans lequel le dispositif est dimensionné de telle sorte que le corps creux (20, 20') disposé sur le segment puisse être tourné par rapport à l'arbre (10, 10') au maximum de la moitié d'un angle qui, lorsque la section transversale est composée d'un cercle et d'au moins deux renflements disposés sur la périphérie du cercle, s'étend entre les sommets de deux renflements.

6. Dispositif selon l'une quelconque des revendications 1 à 5, dans lequel le dispositif est réalisé de telle sorte que le corps creux (20, 20') puisse être disposé avec ajustement appuyé sur le segment.

7. Dispositif selon l'une quelconque des revendications 1 à 6, dans lequel le corps creux (20, 20') est réalisé sous forme annulaire.

8. Dispositif selon l'une quelconque des revendications 1 à 7, dans lequel le corps creux (20, 20') et/ou l'arbre (10, 10') sont réalisés en un acier.

9. Dispositif selon la revendication 8, dans lequel l'acier est un acier Nirosta.

10. Dispositif selon l'une quelconque des revendications 1 à 9, dans lequel l'arbre (10, 10') est relié au corps creux (20, 20') par l'intermédiaire de moyens qui relient l'arbre au corps creux (20, 20') de manière solidaire en rotation jusqu'à une charge de couple statique ou dynamique pouvant être prédéfinie.

11. Dispositif selon la revendication 10, dans lequel les moyens sont prévus entre l'arbre et le corps creux, en s'engageant par complémentarité de formes dans des renfoncements correspondants de l'arbre (10, 10') et du corps creux (20, 20').

12. Dispositif selon la revendication 10 ou 11, dans lequel les moyens comportent au moins une goupille de cisaillement (15').

13. Dispositif selon l'une quelconque des revendications 1 à 12, dans lequel la partie saillante (25, 25') est réalisée en forme de dent.

14. Dispositif selon l'une quelconque des revendications 1 à 13, dans lequel le dispositif appartient à un système de pivotement d'un appareil radiographique à bras en C pour le pivotement du bras en C autour d'un axe positionné approximativement verticalement sur le bras en C.
